# EUROPÄISCHE PATENTANMELDUNG

(11) **EP 2 090 208 A2**
(43) Veröffentlichungstag der Anmeldung: **19.08.2009**
(21) Anmeldenummer: 08019994.6
(22) Anmeldetag: 17.11.2008
(51) Int. Cl.: A47J 39/00

(54) **Vorrichtung zum Garen von Lebensmitteln**

(30) Priorität: 15.11.2007 DE 102007054557
(71) Anmelder: SAUERSTOFFWERK FRIEDRICH GUTTROFF GMBH, D-97877 Wertheim (DE); Kienzle, Paul, 97990 Weikersheim (DE)
(72) Erfinder: Kienzle, Paul, 97990 Weikersheim (DE); Bromme, Jürgen, 97892 Kreuzwertheim (DE); Tallafus, Ollmar, 74722 Buchen (DE)
(74) Vertreter: Dimmerling, Heinz

(57) **Zusammenfassung**

Eine Vorrichtung zum Herstellen von Cook-Chill-Speisen, mit einem beheizbaren Garraum (1), in den die betreffenden Lebensmittel einbringbar sind, ist **dadurch gekennzeichnet, dass** eine Zuführung (2) vorhanden ist, mittels welcher eine kryogene Flüssigkeit in den Garraum (1) einleitbar ist.

Ein Verfahren zur Herstellung von Cook-Chill-Speisen, bei dem die betreffenden Lebensmittel zunächst gegart werden und anschließend auf eine Temperatur unter drei Grad Celsius gekühlt werden, ist dadurch gekennzeichnet, dass die Kühlung der Speisen mittels einer kryogenen Flüssigkeit erfolgt.

## Beschreibung

Die Erfindung betrifft eine Vorrichtung zum Garen von Lebensmitteln nach dem Oberbegriff des Anspruchs 1, mit einem beheizbaren Garraum, in den die Lebensmittel einbringbar sind.

Eine derartige Vorrichtung ist beispielsweise aus der EP 0 556 698 A2 bekannt. Darüber hinaus wird sie in unterschiedlichsten Größen und Ausführungen auf dem Markt angeboten.

Mittels der bekannten Vorrichtungen lassen sich Speisen nach dem so genannten "Cook-Chill-System" herstellen. Beim Cook-Chill-System werden warme Speisenkomponenten nach dem Garen nicht warm gehalten oder umgehend ausgegeben sondern möglichst schnell auf eine Temperatur von unter drei Grad Celsius gekühlt. Die Speisen sollen hierdurch das Aussehen und den Geschmack wie am Ende des Garprozesses behalten; Wichtig ist dabei, den Temperaturbereich, in dem sich Mikroorganismen bevorzugt vermehren, möglichst schnell zu durchschreiten.

Aus "Verpflegungs-Management 4, 2005" ist bekannt, die Speisen nach dem Garen in einem Umluftkühler (Schnellkühler) abzukühlen, wobei darauf hingewiesen wird, dass der Einsatz von einzelnen Großgeräten ungünstiger sein kann als der Einsatz einer größeren Anzahl kleinerer Geräte. Die Schnellkühler können entweder über eingebaute Stellagen, in die einzelne Behälter einzuschieben sind, verfügen, oder die Speisenbehälter werden gemeinsam in einem Gestellwagen eingebracht.

Nachteilig bei der bekannten Verfahrensweise ist, dass die Speisen, nachdem sie aus dem Garraum genommen wurden, regelmäßig zunächst für einen unbestimmten Zeitraum abgestellt werden, bevor sie in den Schnellkühler eingebracht werden. Die Zeit, bis die Speisen in den Schnellkühler eingebracht werden, hängt unter anderem von der Kapazität des Schnellkühlers ab. So kann es vorkommen, dass die Speisen mehrere Stunden außerhalb des Garraums verbringen, bevor Platz in einem Schnellkühler vorhanden ist, in den sie dann eingebracht werden können.

Insbesondere ist bei der bekannten Verfahrensweise sehr nachteilig, dass der Zustand der Speisen beziehungsweise die Umgebungsbedingungen, in denen sich die Speisen nach der Entnahme aus dem Garraum und vor dem Einbringen in einen Schnellkühler befinden, nicht protokolliert wird. Denn während die Behandlung der Speisen im Garraum und im Schnellkühler mittels entsprechender Messwertaufnehmer protokolliert werden können und somit die Behandlung der Speisen während der betreffenden Phasen nachprüfbar ist, ist nicht vorgesehen, entsprechende Daten außerhalb des Garraums beziehungsweise des Schnellkühlers zu erfassen, sodass sich über den Zeitraum zwischen dem Garen und dem Schnellkühlen keine Aussage machen lässt. Dies ist insbesondere im Hinblick darauf, dass nach dem Cook-Chill-Verfahren hergestellte Speisen regelmäßig für größere Abnehmer wie beispielsweise Krankenhäuser und Altenheime vorgesehen sind, sehr problematisch, da beispielsweise beim Auftreten von Übelkeit nach dem Genuss der Speisen ein Nachweis für einen ordnungsgemäßen Ablauf beim Herstellen der Speisen nicht erbracht werden kann.

Ein weiterer Nachteil bei der bekannten Verfahrensweise ist, dass das Herunterkühlen der Speisen auf eine Temperatur von unter drei Grad Celsius in einem konventionellen Schnellkühler, welcher nur mit Kaltluft von höchstens minus vierzig Grad Celsius arbeiten kann, relativ lange dauert.

Es ist Aufgabe der Erfindung, eine eingangs genannte Vorrichtung beziehungsweise ein eingangs genanntes Verfahren derart auszubilden, dass die Qualität der mittels ihr beziehungsweise mittels ihm hergestellten Speisen verbessert ist.

Die Lösung dieser Aufgabe ergibt sich aus den Merkmalen des kennzeichnenden Teils des Anspruchs 1 beziehungsweise des Anspruchs 9. Vorteilhafte Weiterbildungen der Erfindung ergeben sich aus den Unteransprüchen.

Gemäß der Erfindung ist eine Vorrichtung zum Garen von Cook-Chill-Speisen, mit einem beheizbaren Garraum, in den die betreffenden Lebensmittel einbringbar sind, dadurch gekennzeichnet, dass eine Zuführung vorhanden ist, mittels welcher eine kryogene Flüssigkeit in den Garraum einleitbar ist.

Des Weiteren ist ein Verfahren zur Herstellung von Cook-Chill-Speisen, bei dem die betreffenden Lebensmittel zunächst gegart werden und anschließend auf eine Temperatur unter drei Grad Celsius gekühlt werden, dadurch gekennzeichnet, dass die Kühlung der Speisen mittels einer kryogenen Flüssigkeit erfolgt.

Dadurch, dass die Vorrichtung zum Herstellen von Cook-Chill-Speisen eine Zuführung aufweist, mittels welcher eine kryogene Flüssigkeit in den Garraum einleitbar ist, ist es möglich, die sich im Garraum befindlichen Speisen unmittelbar nach dem Garen zu kühlen, ohne dass die Speisen dem Garraum entnommen werden müssen. Hierdurch wird zum einen der große Vorteil erreicht, dass die Behandlung der Speisen ununterbrochen protokolliert werden kann. Eine zwischen dem Garen und Kühlen vorhandene Phase, während der der Zustand der Speisen nicht protokolliert wird, ist somit nicht mehr vorhanden. Da herkömmliche Vorrichtungen zum Garen von Speisen in der Regel mit entsprechenden Messwertaufnehmem ausgerüstet sind, lässt sich eine durchgehende Protokollierung auf einfache Weise erreichen. Es dürfte in der Regel genügen, die entsprechenden Messwertaufnehmer an den neuen im Garraum auftretenden Temperaturbereich von beispielsweise minus 85 Grad Celsius bis plus 200 Grad Celsius anzupassen beziehungsweise gegen entsprechende Messwertaufnehmer auszutauschen.

Der Umstand, dass die Speisen zum Kühlen nicht mehr in einen separaten Schnellkühler eingebracht werden müssen und gegebenenfalls außerhalb des Garraums beziehungsweise Schnellkühlers abgestellt werden müssen, wirkt sich zum anderen sehr vorteilhaft auf die Keimfreiheit der Speisen aus. Denn bei der bisher bekannten Vorgehensweise stehen die Speisen nach der Entnahme aus dem Garraum ungeschützt herum, bis sie in den Schnellkühler eingebracht werden können, sodass sie mit Bakterien in Berührung kommen können.

Dadurch, dass die Speisen mittels einer kryogenen Flüssigkeit gekühlt werden, wird in vorteilhafter Weise erreicht, dass sie sehr schnell auf eine Temperatur von unter drei Grad Celsius gebracht werden können, da die Kühlung mittels kryogener Flüssigkeit sehr effektiv ist. Des Weiteren sind zur Kühlung keine aufwendigen Bauteile wie Kühlschlangen oder Kompressoren erforderlich, sodass sich herkömmliche Vorrichtungen zum Garen von Lebensmitteln ohne großen Aufwand zu einer erfindungsgemäßen Vorrichtung umbauen lassen. Da herkömmliche Vorrichtungen zum Garen von Lebensmitteln in der Regel eine genügende Wärmeisolierung besitzen, müssen sie zur Anwendung der Erfindung im Wesentlichen nur noch mit einer Zuführung für die kryogene Flüssigkeit versehen werden.

Wenngleich die kryogene Flüssigkeit auch auf beliebige Weise in den Garraum eingebracht werden kann, so hat es sich dennoch als sehr vorteilhaft erwiesen, die kryogene Flüssigkeit mittels eines Elements zur Erzeugung von Umluft im Garraum zu verteilen, wie dies bei einer besonderen Ausführungsform der Erfindung vorgesehen, ist. Besonders vorteilhaft hierbei ist es, wenn das Element ein um eine Achse drehbares Lüfterrad aufweist und die kryogene Flüssigkeit im Bereich der Achse auf das Lüfterrad leitbar ist, wie dies Gegenstand einer weiteren besonderen Ausführungsform der Erfindung ist.

Dadurch, dass die kryogene Flüssigkeit mittels des Elements zur Erzeugung von Umluft, das heißt insbesondere mittels des Lüfterrads im Garraum verteilt wird, wird eine sehr wirksame Kühlung der Speisen erreicht. Denn durch die entstandene Strömung erfolgt ein guter Wärmetransport von den Speisen weg.

Durch die Kühlung der Speisen mittels kryogener Flüssigkeit lässt sich der Temperaturverlauf im Garraum sehr leicht und nahezu unverzögert steuern. Zur Steuerung der Temperatur im Garraum braucht lediglich die Menge der in den Garraum eingeleiteten kryogenen Flüssigkeit gesteuert zu werden. Wird sehr viel kryogene Flüssigkeit in den Garraum eingeleitet, wird eine sehr große Kühlung erreicht. Durch Verringern der in den Garraum eingeleiteten kryogenen Flüssigkeit wird auch die Kühlleistung verringert. Die Steuerung der kryogenen Flüssigkeit lässt sich auf einfache Weise mittels eines in der Zuleitung angeordneten Magnetventils erreichen, welches bis minus 200 Grad Celsius ausgelegt ist.

In vorteilhafter Weise weist der Garraum einen Auslass auf, mittels dem er entlüftbar ist. Hierdurch wird in vorteilhafter Weise erreicht, dass der Druck im Garraum auf einen Sollwert geregelt werden kann, wozu vorzugsweise im Garraum ein Drucksensor angeordnet ist. Durch die Druckregelung des Garraums wird einerseits erreicht, dass die in den Garraum eingeleitete kryogene Flüssigkeit in optimaler Weise zur Kühlung ausgenutzt werden kann. Denn durch den für die Druckregelung erforderlichen Drucksensor lässt sich die Einleitung der kryogenen Flüssigkeit in den Garraum beispielsweise unterbrechen, wenn im Garraum ein vorbestimmter Druck von beispielsweise zwölf Millibar erreicht ist. Gleichzeitig mit Unterbrechung der Einleitung der kryogenen Flüssigkeit in den Garraum wird der Auslass geöffnet, sodass bei Erwärmung der kryogenen Flüssigkeit im Garraum kein Überdruck entsteht. Sinkt der Druck im Garraum beispielsweise auf zwei Millibar ab, wird der Auslass wieder geschlossen und wird wieder kryogene Flüssigkeit in den Garraum eingeleitet. Im vorstehenden Beispiel beträgt der Sollwert sieben Millibar.

Bei einer weiteren besonderen Ausführungsform der Erfindung ist vorgesehen, dass der Sollwert temperatur- und/oder zeitabhängig veränderbar ist. Hierdurch lässt sich erreichen, dass zu Beginn der Kühlung mehr kryogene Flüssigkeit in den Garraum eingeleitet wird, sodass eine schnellere Kühlung der Speisen erreicht wird, und bei Erreichen einer vorbestimmten Temperatur beziehungsweise nach Ablauf einer vorbestimmten Zeit weniger kryogene Flüssigkeit in den Garraum eingeleitet wird, wodurch die Kühlung langsamer erfolgt.

Neben der Berücksichtigung der im Garraum vorhandenen Temperatur sowie des im Garraum vorhandenen Drucks zur Steuerung der Zuführung der kryogenen Flüssigkeit in den Garraum lassen sich zur Erzeugung eines Temperaturprofils der im Garraum vorhandenen Temperatur auch noch die Kerntemperatur sowie die Randtemperatur der im Garraum vorhandenen Speisen berücksichtigen. Hierzu sind im Garraum Sensoren angeordnet, mittels der die Kerntemperatur beziehungsweise die Randtemperatur der Speisen erfasst werden können. Des Weiteren kann das Temperaturprofil zeitabhängig sein.

Sehr vorteilhaft ist auch eine Ausführungsform der Erfindung, bei der ein Speicher vorhanden ist, in dem alle wichtigen Parameter, wie beispielsweise Garzeit, Kühlzeit, Garraumtemperatur, Produktanfangs- und Produktendtemperatur nach dem Abkühlen gespeichert werden können. In besonders vorteilhafter Weise erfolgt die Aufzeichnung der Parameter automatisch, das heißt vom Bediener unabhängig. Hierdurch sind Fehler durch menschliches Versagen nahezu vollständig ausgeschlossen.

Durch die Aufzeichnung der Parameter in dem Speicher lässt sich der gesamte Herstellungsprozess der Speisen auf einfache Weise dokumentieren. Dies kann insbesondere dadurch geschehen, dass der Prozessverlauf mittels eines Druckers ausgedruckt wird.

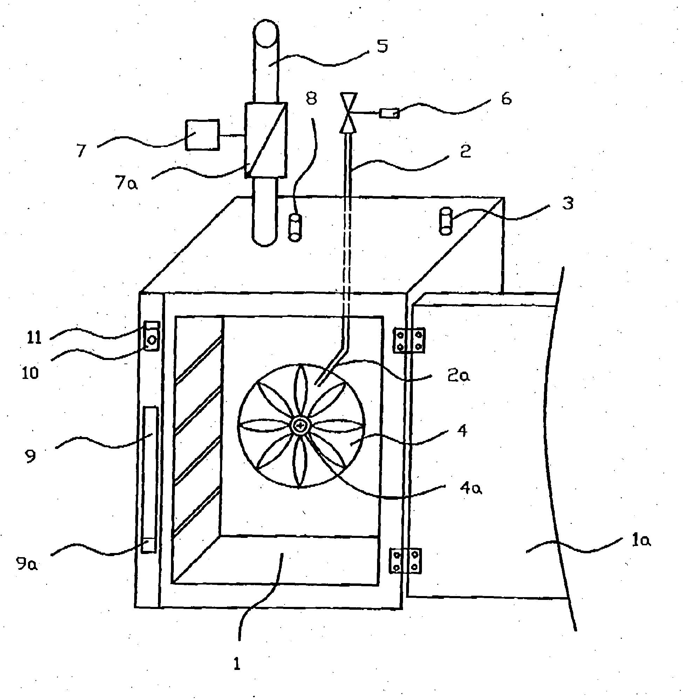

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine schematische Anordnung einer erfindungsgemäßen Vorrichtung.

Wie der Figur entnommen werden kann, weist eine erfindungsgemäße Vorrichtung einen Garraum 1 auf, welcher mit einer Tür 1a dicht verschlossen werden kann. Die Tür 1 a ist in der Figur nur teilweise dargestellt. Im Garraum 1 sind Schienen 1 b angeordnet, welche es ermöglichen, in den Garraum 1 entsprechende Behälter oder Tabletts einzuschieben. Der Garraum 1 ist rundherum wärmeisoliert.

Im Garraum 1 ist ein um eine Achse 4a drehbares Lüfterrad 4 angeordnet, mittels welchem im Garraum 1 eine Umluft erzeugbar ist. Auf die Achse 4a des Lüfterrades 4 ist die Düse 2a einer Zuleitung 2 gerichtet, mittels welcher kryogene Flüssigkeit in das Innere des Garraums 1 beziehungsweise auf die Achse 4a des Lüfterrads 4 leitbar ist. In der Zuführung 2 ist ein Magnetventil 6 angeordnet, mittels weichem die Einleitung von kryogener Flüssigkeit in den Garraum 1 unterbrochen beziehungsweise die Durchflussmenge der kryogenen Flüssigkeit gesteuert werden kann.

Im Garraum 1 ist des Weiteren ein Temperatursensor 3 angeordnet, welcher einen Temperaturbereich von minus 85 Grad Celsius bis plus 200 Grad Celsius hat, sowie ein Drucksensor 8 angeordnet, mittels dem der Druck im Garraum 1 in einem Bereich von beispielsweise ein bis fünfzehn Millibar erfassbar ist.

Vom Inneren des Garraums 1 erstreckt sich nach außen ein Auslass 5, durch den der Garraum 1 entlüftet werden kann. Im Auslass 5 ist eine mittels eines Stellglieds 7 betätigbare Klappe 7a angeordnet, mittels weicher der Auslass 5 dicht verschließbar ist.

Die erfindungsgemäße Vorrichtung weist weiterhin eine Steuerung 9 auf, mittels welcher das Lüfterrad 4, das Magnetventil 6 sowie das Stellglied 7 beziehungsweise die Klappe 7a in Abhängigkeit des Temperatursensors 3 sowie des Drucksensors 8 und einem in der Figur nicht dargestellten Zeitglied gesteuert werden. Die Steuerung 9 weist ein Druckwerk 9a auf, mittels dem der Betriebszustand der Vorrichtung, insbesondere der Temperatur- und Druckverlauf im Garraum 1 protokolliert werden kann. Des Weiteren ist ein Geber 10 vorhanden, zur Eingabe von den Betrieb der Vorrichtung betreffenden Daten, sowie ein Display 11 vorhanden, zur Anzeige bestimmter Betriebsparameter.

Mittels der erfindungsgemäßen Vorrichtung können mit Heißdampf oder Heißluft vorgegarte Lebensmittel oder ganze Menüs innerhalb von zwanzig bis sechzig Minuten mit einem kryogenen Kühlmittel wie beispielsweise flüssigem Sauerstoff (LO₂) oder flüssigem Stickstoff (LN₂) von beispielsweise sechzig Grad Celsius bis neunzig Grad Celsius auf eine Produkttemperatur von plus drei Grad Celsius sehr schnell gekühlt werden, ohne dass die vorgegarten Lebensmittel beziehungsweise Menüs aus dem Garraum der Vorrichtung genommen werden müssen. Hierdurch ist es möglich, den Prozessverlauf auf einfache Weise vollständig zu dokumentieren, da die Steuerung der Vorrichtung alle Parameter für die Aufheizung und Abkühlung der Lebensmittel beziehungsweise der Menüs zeitgleich mitschreibt, wobei zur Dokumentation die Parameter für jede Charge ausgedruckt werden können. Dadurch, dass der Cook-Chill-Prozess von Anfang bis Ende vollständig im Garraum der Vorrichtung stattfindet, ist eine Manipulation der Dokumentation ausgeschlossen. Des Weiteren sind Fehler durch menschliches Versagen nahezu vollständig ausgeschlossen.

## Patentansprüche

1. Vorrichtung zum Herstellen von Cook-Chill-Speisen, mit einem beheizbaren Garraum (1), in den die betreffenden Lebensmittel einbringbar sind,
**dadurch gekennzeichnet,**
**dass** eine Zuführung (2) vorhanden ist, mittels welcher eine kryogene Flüssigkeit in den Garraum (1) einleitbar ist.

2. Vorrichtung nach Anspruch 1,
**dadurch gekennzeichnet,**
**dass** ein Temperatursensor (3) vorhanden ist, mittels dem die Temperatur im Garraum (1) erfassbar ist, und welcher einen Temperaturbereich von minus 85 Grad Celsius bis plus zweihundert Grad Celsius hat.

3. Vorrichtung nach Anspruch 1 oder 2,
**dadurch gekennzeichnet,**
**dass** die kryogene Flüssigkeit mittels eines Elements (4) zur Erzeugung von Umluft im Garraum (1) verteilbar ist.

4. Vorrichtung nach Anspruch 3,
**dadurch gekennzeichnet,**
**dass** das Element (4) ein um eine Achse (4a) drehbares Lüfterrad (4) aufweist und die kryogene Flüssigkeit im Bereich der Achse (4a) auf das Lüfterrad (4) leitbar ist.

5. Vorrichtung nach einem der Ansprüche 1 bis 4;
**dadurch gekennzeichnet,**
**dass** die Einleitung der kryogenen Flüssigkeit in den Garraum (1) steuerbar ist.

6. Vorrichtung nach einem der Ansprüche 1 bis 5,
**dadurch gekennzeichnet,**
**dass** ein Auslass (5) vorhanden ist, mittels dem der Garraum (1) entlüftbar ist.

7. Vorrichtung nach Anspruch 6,
**dadurch gekennzeichnet,**
**dass** die Entlüftung des Garraums (1) auf einen Sollwert druckgeregelt ist.

8. Vorrichtung nach Anspruch 7,
**dadurch gekennzeichnet,**
**dass** der Sollwert temperatur- und/oder zeitabhängig veränderbar ist.

9. Vorrichtung nach einem der Ansprüche 1 bis 8,
**dadurch gekennzeichnet,**
**dass** ein Speicher vorhanden ist, in dem alle wichtigen Parameter wie zum Beispiel Garzeit, Kühlzeit, Garraumtemperatur, Produktanfangs- und Produktendtemperatur nach dem Abkühlen automatisch, das heißt vom Bediener unabhängig, aufgezeichnet werden können.

10. Verfahren zur Herstellung von Cook-Chill-Speisen, bei dem die betreffenden Lebensmittel zunächst gegart werden und anschließend auf eine Temperatur unter drei Grad Celsius gekühlt werden,
**dadurch gekennzeichnet,**
**dass** die Kühlung der Speisen mittels einer kryogenen Flüssigkeit erfolgt.
